# EUROPEAN PATENT APPLICATION

(11) **EP 3 771 483 A1**
(43) Date of publication of application: **03.02.2021**
(21) Application number: 20187652.1
(22) Date of filing: 24.07.2020
(51) Int. Cl.: B01D 39/16

(54) **CLEANABLE FILTER MEDIUM**

(30) Priority: 31.07.2019 EP 19000354
(71) Applicant: Johns Manville, Denver, CO 80202 (US)
(72) Inventor: MEIER, Jörg, 86845 Großaitingen (DE); LEHNERT, Jörg, 86830 Schwabmünchen (DE); WEIZENEGGER, Hermann, 86830 Schwabmünchen (DE)
(74) Representative: Dörr, Klaus

(57) **Abstract**

The present invention relates to a cleanable 3D filter medium, a method for manufacturing said filter and the use of the filter.

The filter medium according to the present invention comprises at least one textile layer being a non-woven of synthetic, organic polymer fibers. The nonwoven having an embossed pattern in which the nonwoven having at the non-embossed area a thickness D and at the embossed area a thickness d and the ratio d/D is the compression factor CF, said compression factor CF being in the range 0.2 ≤ FC ≤ 0.5.

The filter medium according to the present invention can be cleaned and are used in filter systems for air/gas and liquid filtration, particularly in the motor vehicle industry, in air conditioning systems, passenger compartment filters, pollen filters, clean room filters, domestic filters, and as oil filters and hydraulic filters, thus removing solids from air/gas and liquids.

## Description

The present invention relates to a cleanable 3D filter medium, a method for manufacturing said filter and the use of the filter.

The use of filters has long been known for various applications. Air filters are used, for example, in the automotive industry, in air conditioning systems, passenger compartment filters, pollen filters, clean room filters, domestic filters, etc. In addition, filters have also been used for many years in the filtration of liquid media. Examples of these include oil filters and hydraulic filters.

Filter media are described in EP-A-0878226, EP-A-1134013, DE-A-2000139245 and EP-A-0980700, for example.

Filters are adapted to achieve a satisfactory filtration efficiency and service life depending on the field of application. Removing solids from liquids and/or gaseous fluids is a most common field of filtration. Here typically the liquid and/or gaseous feed containing such solid particles cannot pass through the lattice structure of the filter and clogging of the filter media occurs with service time. Clogging causes a pressure drop meaning that an increased pressure is needed to pass the same volume through the filter leading to higher energy consumption. Thus, one need to replace the filter by a new filter or to clean the filter by removing the filtered material from the filter. All such activities are time-consuming and expensive measures leading to the need for improved cleanable filter media. Such cleanable filter media are typically cleaned by simply reversing the flow direction of the filtration fluid, typically using pulsed pressurized filtration fluids to remove the filtered solids from the filter.

The instant inventors found that a cleanable filter media can be provided which is robust enough to survive several cleaning cycles while maintaining the good filtration properties, such as filter efficiency, dust holding capacity and energy efficiency.

The object of the present invention, therefore, is a filter medium comprising:
a) at least one textile layer (layer 1) being a non-woven of synthetic, organic polymer fibers,
   a1) the non-woven having a weight per unit area of 50 to 400 g/m²,
   a2) the fibers of the non-woven having a titer in the range of 0.5 to 15 dtex,
   a3) the non-woven being consolidated by means of thermoplastic binders and/or mechanical means, with the proviso that the non-woven is not consolidated by needling and/or hydro-jet needling,
   a4) the nonwoven having an embossed pattern, the nonwoven having an air permeability from at least 50 l/m²sec, preferably between 100 l/m² sec and 2000 l/m²sec,
   a5) the nonwoven having an embossed pattern, said embossed pattern surface area of the nonwoven being from 7 to 30% of the total surface area of the nonwoven,
   a6) each individual embossed pattern surface area of the nonwoven having a surface area from 0.4 to 5.6 mm²,
   a7) the nonwoven having at the non-embossed area a thickness D and at the embossed area a thickness d and the ratio d/D is the compression factor CF, said compression factor CF being in the range 0.2 ≤ FC ≤ 0.5.

### Nonwoven (layer 1)

The textile layer used according to the invention is a non-woven of synthetic, organic, polymer fibers which preferably is pleatable.

The non-woven can be made up of various synthetic organic polymer fibers from different polymers or different polymer classes. Furthermore, the non-woven can also be made up in a multi-ply manner itself. Here, the individual layers within the nonwoven can differ with regard to the various chosen synthetic polymer fibers and/or have various fiber diameters, however, such parameter being within the ranges given for the nonwoven.

The non-woven is either a wet-laid non-woven, dry-laid non-woven or spunbonded nonwoven, which is consolidated by means of thermoplastic binders and/or mechanical means, with the proviso that the non-woven is not consolidated by needling and/or hydro-jet needling. Preferably, the non-woven is consolidated by means of thermoplastic binders only. Preferably, the non-woven is a staple fiber non-woven and/or a spunbonded nonwoven. Spunbonded nonwoven, typically just referred to as spunbonds, are produced by a random deposition of freshly melt-spun filaments. The filaments are continuous synthetic fibers composed of melt-spinnable polymer materials.

Suitable synthetic, organic polymer materials are, for example, thermoplastics, preferably polyamides, such as polyhexamethylene-diadipamide, polycaprolactam, aromatic or partially aromatic polyamides ("aramides"), aliphatic polyamides, such as nylon, partially aromatic or fully aromatic polyesters, aliphatic polyesters, polycarbonates (PC), polyphenylene sulphide (PPS), polyphenylene oxide (PPO), polystyrene (PS), polyvinyl carbazole (PVK), polyacetal (POM), polyaryl ether, polyaryl sulphone, polyether sulphone, polymers with ether and keto-groups, such as polyether ketones (PEK) and polyetheretherketone (PEEK), polyolefins, such as polyethylene or polypropylene, or polybenzimidazoles. Particularly preferred are polyester, polyolefins, such as e.g. polyethylene or polypropylene, or aromatic or partially aromatic polyamides ("aramids"), aliphatic polyamides, such as e.g. nylon.

The spunbonded nonwoven are preferably composed of melt-spinnable polyesters. The polyester material can, in principle, be any known type suitable for fiber production. Such polyesters consist predominantly of components derived from aliphatic or aromatic dicarboxylic acids and from aliphatic diols. Commonly used aromatic dicarboxylic acid components are bivalent residues of benzenedicarboxylic acids, especially of terephthalic acid and of isophthalic acid; commonly used diols have 2 to 4 carbon atoms, wherein ethylene glycol is particularly suitable. Spunbonded fabrics which consist of at least 85 mole % of polyethylene terephthalate is particularly advantageous. The remaining 15 mol% are then formed by dicarboxylic acid moieties and glycol moieties which act as so-called modifiers and allow the person skilled in the art to specifically influence the physical and chemical properties of the produced filaments. Examples of such dicarboxylic acid units are residues of isophthalic acid or of aliphatic dicarboxylic acid, such as glutaric acid, adipic acid, and sebacic acid; examples of modifying diol residues are those composed of longer-chain diols, such as propane diol or butane diol, of diethylene or triethylene glycol or, if present in small quantities, of polyglycol with a molar weight of approximately 500 to 2000.

Polyesters containing at least 95 mol % of polyethylene terephthalate (PET) are particularly preferred, especially those composed of unmodified PET.

The polyesters contained in the spunbonded nonwoven preferably have a molecular weight corresponding to an intrinsic viscosity (IV) of 0.6 to 1.4, measured in a solution of 1 g polymer in 100 ml dichloroacetic acid at 25 °C.

In one embodiment of the invention, the non-woven, particularly the spunbonded non-woven, is consolidated by a melt-fusible binder causing a melt-binder-consolidated non-woven fabric, i.e. the consolidation takes place by means of a thermoplastic binder which is preferably present in fiber form. The fusible binder-consolidated non-woven fabric therefore comprises carrier and hot melt adhesive fibers. The carrier and hot-melt adhesive fibers can be derived from any thermoplastic, fiber-forming polymers, carrier fibers can furthermore also be derived from non-melting fiber-forming polymers. Such fusible binder-consolidated spunbonded fabrics are fundamentally described, for example, in EP-A 0,446,822 and EP-A 0,590,629.

Examples of polymers from which the carrier fibers can be derived are polyacrylonitrile, polyolefins, such as polyethylene or polypropylene, primarily aliphatic polyamides, such as nylon 6.6, primarily aromatic polyamides (aramids), such as poly-(p-phenylene terephthalate) or copolymers containing a content of aromatic m-diamine moieties to improve the solubility, or poly-(m-phenylene isophthalate), primarily aromatic polyesters, such as poly-(p-hydroxybenzoate), or preferably primarily aliphatic polyesters, such as polyethylene terephthalate.

The relative proportion of the two fiber types may be selected within wide limits, whilst making sure that the proportion of the hot melt adhesive fibers is sufficient to bond the carrier fibers to the hot melt adhesive fibers, thereby endowing the non-woven fabric with a strength sufficient for the intended application, whilst on the other hand ensuring the necessary air permeability. The proportion of the hot-melt derived from the hot-melt fiber in the non-woven is usually less than 50% by weight (based upon the weight of the non-woven).

Modified polyesters having a melting point 10 to 50 °C, preferably 30 to 50 °C, lower than the raw material of the non-woven fabric are particularly suitable as hot melt adhesive. Examples of such a hot melt adhesive are polypropylene, polybutylene terephthalate, or polyethylene terephthalate modified by the condensation of longer-chain diols and/or isophthalic acid or aliphatic dicarboxylic acid.

The hot melt adhesives are preferably incorporated into the non-woven fabrics in fibrous form.

The carrier fibers and hot melt adhesive fibers are preferably made up of one class of polymers. This implies that all of the fibers used are selected from one class of substances, so that these can readily be recycled after the non-woven fabric has been used. If the carrier fibers consist of polyester, for example, the hot melt adhesive fibers selected will likewise be of polyester or a mixture of polyesters, for example in the form of bi-component fibers with PET in the core and a polyethylene terephthalate copolymer having a low melting point as sheath. In addition, however, bi-component fibers which are made up of different polymers are also possible. Examples of these are bi-component fibers of polyester and polyamide (core/sheath).

The filament titer of the carrier fibers and the hot melt adhesive fibers may be selected within said limits.

The filaments or staple fibers making up the non-woven may have a virtually circular cross section or may also have other shapes, such as dumb bell-shaped, reniform, triangular, trilobal or multilobal cross sections. Hollow fibers and bi-component or multi-component fibers may also be used. Furthermore, the hot-melt adhesive fiber may also be used in the form of bi-component or multi-component fibers.

The fibers forming the non-woven may also be modified by means of the usual additives, for example by antistatic agents such as carbon black, or additives which will permit an electrostatic charge. Furthermore, the fibers can comprise antimicrobial materials.

The weight per unit area of the non-woven is between 50 and 400 g/m², preferably 80 and 300 g/m², particularly 100 and 250 g/m². The weight per unit area is determined in accordance with DIN EN ISO 29073-1 (1992-08).

In another embodiment of the invention, the non-woven is pre-consolidated by mechanical means, such as hot rollers or calendaring, provided however that the nonwoven is not consolidated by needling and/or hydrodynamic needling (hydro-jet needling).

For the purpose of pre-consolidation, the fusible binder containing nonwoven, which contain binding fibers in addition to carrier fibers, are thermally pre-consolidated by hot rollers, by calendaring, or in an oven in a manner known per se. The fibers can also have a bi-component structure (e.g. core/sheath), in which the sheath is the binder polymer.

The non-woven fabric being consolidated by means of thermoplastic binders and/or mechanical means, such as calendaring, can additionally contain chemical binders, such chemical binder harden by a curing reaction, typically such chemical binders are acrylate-based binders and/or styrene-based binders and/or starch-based binders and/or phenol-based binders and/or latex-based binders. If present, such chemical binders are present in an amount of 0.1 to 30% by weight (based on the total weight of the nonwoven).

The individual titer of the fibers of synthetic, organic polymer forming the non-woven is between 0.5 and 15 dtex, preferably between 1 and 10 dtex. The titer is typically set during manufacture of the fiber. The titer of the fibers can be determined in accordance with DIN EN ISO 1973:1995-12 (vibroscope method).

Preferably, if the nonwoven is from synthetic, organic polymer staple fibers, such staple fiber having a length between 5 and 100 mm, preferably from 10 and 80 mm.

The non-woven in the filter according to the invention has an air permeability in the range from at least 50 l/m²sec, preferably between 100 l/m² sec and 2000 l/m²sec, more preferably from 150 l/m² sec to 1000 l/m² sec, measured according to DIN EN ISO 9237:1995-12. Said nonwoven in the filter having the embossed pattern with the compression factor according to the instant invention.

As described above, the non-woven can also be made up in a multi-ply manner itself. Here, the individual layers within the nonwoven can differ with regard to the various chosen synthetic polymer fibers and/or have various fiber diameters, however, such parameter being within the ranges given for the nonwoven. Thus, in case the nonwoven having a multi-ply arrangement, at least 2 layers to up to 10 layers, preferably 2 to 4 layers, are present. Preferably, the titer of the fibers increases in one direction of the thickness of the nonwoven, thus forming a titer gradient within the aforementioned titer ranges.

The non-woven, in particular the spunbonded nonwoven, in the filter media according to the invention has at the non-embossed area a thickness D of 0.4 - 0.95 mm, preferably of 0.45 - 0.8 mm. The aforementioned thickness D includes also non-woven having a multi-ply structure.

The non-woven, in particular the spunbonded nonwoven, in the filter media according to the invention having at the non-embossed area a thickness D and at the embossed area a thickness d and the ratio d/D is the compression factor CF, said compression factor CF being in the range 0.2 ≤ FC ≤ 0.5, preferably the compression factor CF being in the range 0.25 ≤ FC ≤ 0.4. The thicknesses D and d are determined by REM microscopic optical methods looking at the cross section of both, the embossed and non-embossed areas.

The non-woven, in particular the spunbonded nonwoven, in the filter media according to the invention having an embossed pattern surface area being from 7 to 30% of the total surface area of the nonwoven.

According to the invention, each of the individual embossed pattern surface area of the nonwoven having a surface area from 0.4 to 5.6 mm².

In general, the shape of the individual embossed pattern is not limited, however, for practical reasons the individual embossed pattern is angular and/or round and/or oval having a length to width ratio from 1:1 to 1:8.

The embossed pattern is made by one or more embossing rolls, said rolls having the desired pattern on the surface of the rolls. Typically, the embossing rolls are heated, typically to a temperature between 80 and 250°C.

The embossed pattern is made by one or more embossing rolls, said rolls pressing the nonwoven with a line pressure of at least 13 daN/cm. Suitable embossing rolls are provided within a calender arrangement.

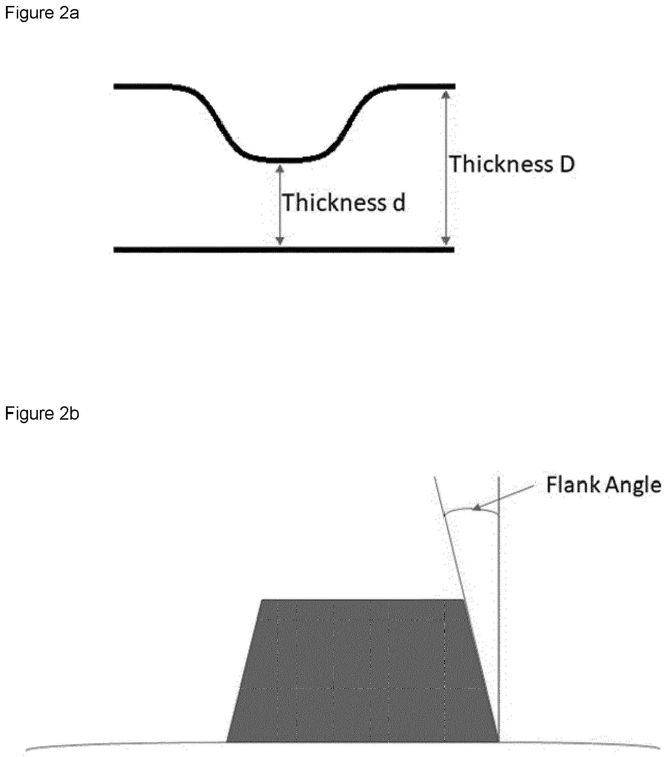

The set-up for manufacturing of the nonwoven having an embossed pattern according to the instant invention can be accomplished by an at least two roller calendar arrangement, in which two opposite rolls are pressing against each other with a line pressure of at least 13 daN/cm, one roll of the calendar having a smooth surface while the other roll of the calendar having a structured surface corresponding to the desired embossing pattern. Typically, the two opposite rolls are heated to a temperature between 80 and 250°C.
The areas of the structured roll protruding from the surface of the roller cause the compression of the nonwoven to the thickness d, while the non-protruding areas of the roller cause the compression of the nonwoven to the thickness D, thus creating the ratio d/D being the compression factor CF, said compression factor CF being in the range 0.2 ≤ FC ≤ 0.5, preferably the compression factor CF being in the range 0.25 ≤ FC ≤ 0.4. This embodiment is illustrated by Figure 2a.

In one embodiment of the instant invention, the areas of the structured roll protruding from the surface of the roller preferably have a flank angle from 18 to 30 degrees, such flank angle introduces the embossed pattern while the mechanical properties of the nonwoven remain robust allowing for a filter medium which can be cleaned during the cleaning cycles. This embodiment is illustrated by Figure 2b.

The non-woven, in particular the spunbonded nonwoven, according to the invention having an embossed pattern surface area being from 7 to 30% of the total surface area of the nonwoven provides a larger active area for the filtration compared to nonwoven not having such embossed pattern surface area.

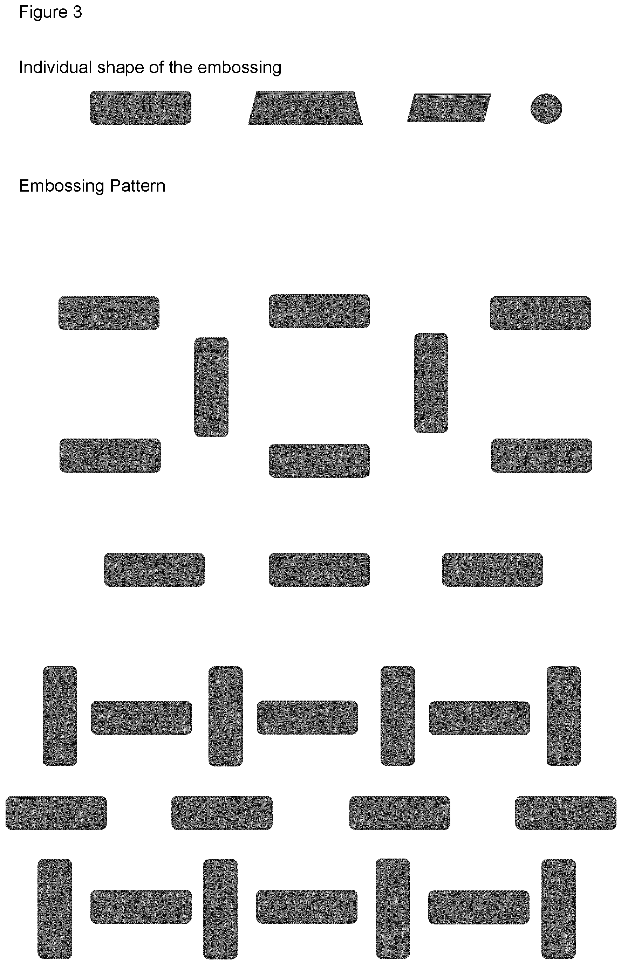

The embossing patterns can be produced by embossing patterns in one x-direction or in both, x- and y-directions. The embossed pattern can be statistically distributed or in an ordered pattern. Exemplary embossing patterns are shown in Figure 3.

As explained, the aforementioned embossing patterns present in the instant nonwoven can be produced by calender roll(s), said roll(s) providing the aforementioned embossing patterns.

The embossing present in the nonwoven filter medium provides for more active filter media surface for a given volumetric gas/air flow and decreasing local flow velocity inside the filter media. Thereby the filter efficiency is increased and the dust holding capacity is improved.

The filter medium according to the instant invention is a so-called cleanable filter medium which can be cleaned by simply reversing the flow direction of the filtration fluid, typically using pulsed pressurized filtration fluids to remove the filtered-off solids from the filter. Surprisingly, the filter medium according to the instant invention exhibits superior performance of the cleaning behavior.

A cleaning cycle removes most of the filtered-off materials from the filtration media, mainly from surface of the filter media. However, it is impossible to remove the filtered material completely. In particular, filter media with large dust holding capacities suffer from incomplete removal of filtered material from the body / volume of the filter medium. The leads to gradual increase of the pressure drop at the start of each cleaning cycle limiting the number of such cleaning cycles. The inventive filter media improves the number of possible cleaning circles considerably.

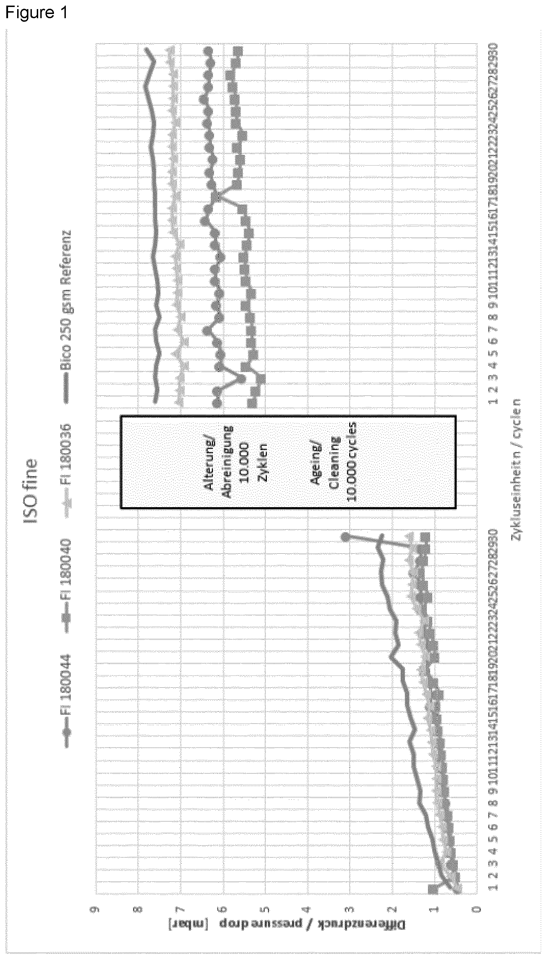

In Fig. 1 the residual pressure drop according VDI 3926 testing procedure is displayed for three filter media made according to the present invention (FI180036, FI180040 and FI180044) and one prior art media for comparison (778/250 Standard). Table 1 contains further information on the aforementioned filter media. As it can be seen, the inventive media exhibit a reduced pressure drop already during the first 30 cleaning cycles. Even after 10.000 cleaning cycles ("ageing", not shown) the improved performance of the inventive filtration media continues.
Filter media testing was carried out using ISO 12103-1 A2 fine test dust at a concentration of 5 g/m³. Air-to-cloth ratio was 120 m³/(m²h). The first and last 30 cycles have been carried out with cleaning after pressure drop reaching 10 mbar. The ageing (10.000 cycles) was carried out with cleaning after each 5 seconds.

Cleaning is performed using pressurized air (tank pressure: 5 bar) with a valve opening time of 60 ms.

**Table 1**

| Type | Area weight [g/m²] | Titer [dtex] | Air permeability [l/m²s] | Embossed area [%] | Surface area [mm²] | Compression Factor CF [%] |
|---|---|---|---|---|---|---|
| FI180036 | 250 | 2.5 | 210 | 23 | 1.42 | 39 |
| FI180040 | 250 | 2.5 | 205 | 17 | 1.25 | 35 |
| FI180044 | 250 | 2.5 | 215 | 12 | 0.48 | 24 |
| Reference Bico/250 | 250 | 2.5 | 150 | 45 | - | 55 |

FI180036, FI180040 and FI180044 are spunbonded nonwoven using core-sheath fibers. Core polymer is PET (polyethylene terephthalate) and sheath is modified PET having a lower melting point that the core PET.
FI180036, FI180040 and FI180044 are thermo-bonded spunbonded nonwoven which are not needled and do not contain chemical binder.
Reference is a thermo-bonded spunbonded nonwoven.

### Manufacture of the filter medium

The nonwoven layer according to the invention is manufactured by known methods available to the person skilled in the art. Suitable methods, for example, are set forth in Handbook of Nonwovens, CRC Press, 2007; the formation of nonwoven, such as spunbonded nonwoven will likewise be a matter of general knowledge to the person skilled in the art.

The nonwoven is either formed in-line or provided as rolled goods. In the in-line process the nonwoven can be subject to a pre-consolidation. The pre-consolidation takes place by using hot rollers or a calender as known by a person skilled in the art. The nonwoven, either formed in-line or provided as rolled goods, is feed into embossing calender providing the embossed pattern according to the instant invention. Embossing of nonwoven materials is also known per se, however, the instant specific embossing provides the benefits of the instant invention.

As already described before the embossing pattern will occur using a calender heated roller at ambient pressure; however, the process could be performed with or without heat and/or pressure. The embossing pattern could be a continuous pattern across the media (Figure 3) or a repeating pattern of discrete imprints such as rectangular, circular, other regular polygons, dimpled, or non-traditional shapes (Figure 3).

The filter media according to the invention are used in filter systems for air/gas and liquid filtration, particularly in the motor vehicle industry, in air conditioning systems, passenger compartment filters, pollen filters, clean room filters, domestic filters, and as oil filters and hydraulic filters, thus removing solids from air/gas and liquids.

The object of the present invention is therefore also a filter system and cartridges, which contain the filter media according to the invention.

The filter media according to the invention can be formed into any number of filter configurations.

Further fields of use of the filter according to the invention are installation and sound-absorption panels.

## Claims

1. Filter medium comprising
a) at least one textile layer (layer 1) being a non-woven of synthetic, organic polymer fibers,
a1) the non-woven having a weight per unit area of 50 to 400 g/m²,
a2) the fibers of the non-woven having a titer in the range of 0.5 to 15 dtex,
a3) the non-woven being consolidated by means of thermoplastic binders and/or mechanical means, with the proviso that the non-woven is not consolidated by needling and/or hydro-jet needling,
a4) the nonwoven having an embossed pattern, the nonwoven having an air permeability from at least 50 l/m²sec,
a5) the nonwoven having an embossed pattern, said embossed pattern surface area of the nonwoven being from 7 to 30% of the total surface area of the nonwoven,
a6) each individual embossed pattern surface area of the nonwoven having a surface area from 0.4 to 5.6 mm²,
a7) the nonwoven having at the non-embossed area a thickness D and at the embossed area a thickness d and the ratio d/D is the compression factor CF, said compression factor CF being in the range 0.2 ≤ FC ≤ 0.5.

2. The filter medium as claimed in claim 1, wherein the non-woven has a multi-ply structure in which the individual layers within the nonwoven differ with regard to the synthetic polymer fibers and/or the fiber diameters.

3. The filter medium as claimed in claim 1 or 2, wherein the non-woven is a wet-laid non-woven, dry-laid non-woven or spunbonded nonwoven, which is preferably consolidated by means of thermoplastic binders and/or mechanical means, with the proviso that the non-woven is not consolidated by needling and/or hydro-jet needling.

4. The filter medium as claimed in claim 1, 2 or 3, wherein the non-woven is a spunbonded nonwoven, preferably the spunbonded non-woven is consolidated by a melt-fusible binder causing a melt-binder-consolidated non-woven.

5. The filter medium as claimed in one or more of claims 1 to 4, wherein the weight per unit area of the non-woven is between 80 and 300 g/m², preferably 100 and 250 g/m².

6. The filter medium as claimed in one or more of claims 1 to 5, wherein the individual titer of the fibers of synthetic, organic polymer forming the non-woven is between 1 and 10 dtex.

7. The filter medium as claimed in one or more of claims 1 to 6, wherein the non-woven in the filter has an air permeability in the range between 100 l/m² sec and 2000 l/m²sec, preferably from 150 l/m² sec to 1000 l/m² sec.

8. The filter medium as claimed in one or more of claims 1 to 7, wherein the non-woven, in particular the spunbonded nonwoven, in the filter media has at the non-embossed area a thickness D of 0.4 - 0.95 mm, preferably of 0.45 - 0.8 mm.

9. The filter medium as claimed in one or more of claims 1 to 8, wherein the compression factor CF being in the range 0.25 ≤ FC ≤ 0.4.

10. The filter medium as claimed in one or more of claims 1 to 9, wherein the non-woven in the filter media having an embossed pattern surface area being from 7 to 30% of the total surface area of the nonwoven is a spunbonded nonwoven.

11. A method for the manufacture of the filter medium as claimed in one or more of claims 1 to 10, comprising the steps of:
(i) providing a non-woven of synthetic, organic polymer fibers, said non-woven having a weight per unit area of 50 to 400 g/m², said fibers of the non-woven having a titer in the range of 0.5 to 15 dtex,
(ii) consolidating the non-woven by means of thermoplastic binders and/or mechanical means, with the proviso that the non-woven is not consolidated by needling and/or hydro-jet needling,
(iii) applying an embossed pattern to the nonwoven, said embossed pattern surface area of the nonwoven being from 7 to 30% of the total surface area of the nonwoven and each individual embossed pattern surface area of the nonwoven having a surface area from 0.4 to 5.6 mm², said embossed pattern nonwoven having an air permeability from at least 50 l/m²sec, preferably between 100 l/m² sec and 2000 l/m²sec, more preferably from 150 l/m² sec to 1000 l/m² sec,
wherein the nonwoven having at the non-embossed area a thickness D being from 0.4 - 0.95 mm, preferably of 0.45 - 0.8 mm, and at the embossed area a thickness d and the ratio d/D is the compression factor CF, said compression factor CF being in the range 0.2 ≤ FC ≤ 0.5.

12. The method as claimed in claim 12, wherein the embossed pattern is applied by one or more embossing rolls, said rolls pressing the nonwoven with a line pressure of at least 13 daN/cm.

13. The method as claimed in claim 12, wherein the embossed pattern is applied by an at least two roller calendar arrangement, in which two opposite rolls are pressing against each other with a line pressure of at least 13 daN/cm, one roll of the calendar having a smooth surface while the other roll of the calendar having a structured surface corresponding to the desired embossing pattern, preferably the areas of the structured roll protruding from the surface of the roller have a flank angle from 18 to 30 degrees.

14. A use of the filter medium defined in one or more of claims 1 to 10 in filtration of air/gas and liquids.

15. Filter modules including a housing and at least one filter medium defined in one or more of claims 1 to 10.
